(19) **Europäisches Patentamt / European Patent Office / Office européen des brevets**

(11) **EP 4 468 801 A1**

(12) **EUROPEAN PATENT APPLICATION**
published in accordance with Art. 153(4) EPC

(43) Date of publication:
**27.11.2024 Bulletin 2024/48**

(21) Application number: **22928366.8**

(22) Date of filing: **02.12.2022**

(51) International Patent Classification (IPC):
***H04W 72/04*** (2023.01)

(52) Cooperative Patent Classification (CPC):
**H04W 24/02; H04W 24/08; H04W 72/04;**
**H04W 72/044; H04W 72/542**

(86) International application number:
**PCT/CN2022/136245**

(87) International publication number:
**WO 2023/160106 (31.08.2023 Gazette 2023/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.02.2022 CN 202210164137**

(71) Applicant: **Huawei Technologies Co., Ltd.**
**Shenzhen, Guangdong 518129 (CN)**

(72) Inventors:
• **YU, Jian**
  **Shenzhen, Guangdong 518129 (CN)**
• **GAN, Ming**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **SPATIAL MULTIPLEXING METHOD AND FIRST DEVICE**

(57)     This application provides a spatial reuse method and a first device. The method is applicable to a WLAN system that supports the EHT or 802.11be standard. The method includes: receiving a physical layer protocol data unit PPDU sent by a second device, where a bandwidth of the PPDU includes a plurality of 20 megahertz MHz subchannels; and performing OBSS PD-based spatial reuse, where a first signal strength level of the received PPDU is less than an OBSS PD level, and a unit of the first signal strength level is decibel-milliwatt dBm/20 MHz. It can be learned that, according to the method provided in this application, when the first device cannot receive all 20 MHz subchannels of the entire bandwidth of the PPDU, preamble puncturing occurs, or complete preamble puncturing information cannot be obtained, a signal strength level can still be successfully measured. This increases a feasible scenario in which OBSS PD-based spatial reuse can be performed, and improves throughput of the entire system.

FIG. 3

**Description**

This application claims priority to Chinese Patent Application No. 202210164137.5, filed with the China National Intellectual Property Administration on February 22, 2022 and entitled "SPATIAL REUSE METHOD AND FIRST DEVICE", which is incorporated herein by reference in its entirety.

**TECHNICAL FIELD**

This application relates to the field of communication technologies, and in particular, to a spatial reuse method and a first device.

**BACKGROUND**

Wireless local area network (wireless local area network, WLAN) standards have been developed for many generations, and include 802.11a/b/g, 802.11n, 802.11ac, 802.11ax, and 802.11be that is being discussed. The 802.11n standard is referred to as high throughput (high throughput, HT), the 802.11ac standard is referred to as very high throughput (very high throughput, VHT), the 802.11ax standard is referred to as HE (high efficiency, HE), and the 802.1The standard is referred to as EHT (extremely high throughput, EHT).

WLAN devices in 802.11ax, for example, an access point and a station, support only half-duplex transmission. In other words, on a same spectrum bandwidth or channel, only one device can send information, and another device can only receive a signal but cannot send a signal, to avoid interference to the current sending device. However, with increasing density of WLAN devices, it is more common that a basic service set (basic service set, BSS) overlaps another BSS. In other words, an overlapping basic service set (overlapping BSS, OBSS) becomes more common. If a conventional method is used, transmission efficiency is very low. In this case, 802.11ax proposes a spatial reuse (spatial reuse) method. A transmit power is adaptively adjusted, so that devices in the overlapping basic service set can perform transmission at the same time. This improves transmission efficiency.

For example, it is assumed that a BSS 1 includes an access point (access point, AP) 1 and a plurality of stations (stations, STAs) 1. A BSS 2 includes an AP 2 and a STA 2. The BSS 2 is an OBSS of the BSS 1. If the AP 1 transmits a PPDU (physical layer protocol data unit, PPDU) 1 to the STA 1, because basic service areas of the BSS 1 and the BSS 2 partially overlap, the AP 2 may also receive the PPDU 1 sent by the AP 1. In an OBSS packet detection-based (OBSS PD-based, PD: packet detection) spatial reuse method, one of requirements for performing OBSS PD-based spatial reuse by the AP 2 is that a signal strength level (received signal strength level) of the PPDU 1 received by the AP 2 on an entire bandwidth is less than an OBSS PD level. However, a conventional technology for determining, based on a signal strength level on a bandwidth, whether to perform OBSS PD-based spatial reuse may result in a case when the AP 2 cannot receive all 20 MHz subchannels of an entire bandwidth of the PPDU 1, preamble puncturing occurs in the PPDU 1, or the AP 2 cannot obtain complete preamble puncturing information of the PPDU 1, the AP 2 cannot determine whether to perform OBSS PD-based spatial reuse. This reduces throughput of an entire system.

**SUMMARY**

Embodiments of this application provide a spatial reuse method and a first device, to increase a feasible scenario in which OBSS PD-based spatial reuse can be performed, and help improve throughput of an entire system.

According to a first aspect, this application provides a spatial reuse method. The method includes: A first device receives a physical layer protocol data unit PPDU sent by a second device, where a bandwidth of the PPDU includes a plurality of 20 megahertz MHz subchannels. The first device performs overlapping basic service set packet detection OBSS PD-based spatial reuse, where a first signal strength level of the PPDU received by the first device is less than an OBSS PD level, and a unit of the first signal strength level is decibel-milliwatt dBm/20 MHz.

It can be learned that in the method described in the first aspect, the first device measures the first signal strength level of the PPDU in dBm/20 MHz. When the first device cannot receive all 20 MHz subchannels of the entire bandwidth of the PPDU, preamble puncturing occurs, or complete preamble puncturing information cannot be obtained, compared with a technology, for measuring a signal strength level based on an entire bandwidth, that cannot operate or be implemented in these scenarios, a technology, for measuring a signal strength level based on a granularity of 20 MHz, in this embodiment of this application can be implemented in these scenarios. This increases a feasible scenario in which OBSS PD-based spatial reuse can be performed, and improves throughput of an entire system.

In a possible implementation, the first signal strength level is obtained based on signal strength measurement results of a plurality of nonpunctured 20 MHz subchannels in the PPDU.

If the signal strength measurement results of the plurality of 20 MHz subchannels are normalized to obtain the first signal strength level, it is assumed that the plurality of 20 MHz subchannels include a punctured 20 MHz subchannel, and no energy may be transmitted on the punctured 20 MHz subchannel. In this case, the obtained first signal strength level is inaccurate. Alternatively, there may be another signal or interference on the punctured 20 MHz subchannel. As a result, the first signal strength level cannot be accurately measured. Therefore, the punctured 20 MHz subchannel needs to be excluded, to improve accuracy of the determined first signal strength level, and accurately trigger the first device to perform OBSS PD-based spatial reuse.

Optionally, the plurality of nonpunctured 20 MHz subchannels are located on a primary channel. Based on this optional implementation, when preamble puncturing occurs in the PPDU, the first device can accurately/feasibly obtain the first signal strength level.

Optionally, the plurality of nonpunctured 20 MHz subchannels may alternatively be 20 MHz subchannels that are not punctured in the PPDU and that are specified in advance in a standard. Based on this optional implementation, when preamble puncturing occurs in the PPDU, the first device can accurately/feasibly obtain the first signal strength level.

Optionally, the first device determines to: first obtain puncturing information of the PPDU, determine, based on the puncturing information, which 20 MHz subchannels in the PPDU are nonpunctured subchannels, and then measure signal strength of the nonpunctured 20 MHz subchannels in the PPDU. Based on this optional implementation, when preamble puncturing occurs in the PPDU, the first device can accurately/feasibly obtain the first signal strength level.

Optionally, the first device may alternatively determine, through blind detection, which 20 MHz subchannels are nonpunctured subchannels, and then measure signal strength of the nonpunctured 20 MHz subchannels in the PPDU. Based on this optional implementation, when preamble puncturing occurs in the PPDU, the first device can accurately/feasibly obtain the first signal strength level.

Optionally, the plurality of nonpunctured 20 MHz subchannels are a plurality of 20 MHz channels on which the first device operates. Based on this optional implementation, when preamble puncturing occurs in the PPDU, the first device can accurately/feasibly obtain the first signal strength level.

Optionally, the first signal strength level is obtained by normalizing the signal strength measurement results of the plurality of nonpunctured 20 MHz subchannels in the PPDU. Based on this possible implementation, the determined first signal strength level can be more accurate. Based on this optional implementation, the signal strength measurement results of the plurality of nonpunctured 20 MHz subchannels in the PPDU can be normalized to obtain the first signal strength level of the PPDU in dBm/20 MHz, to help reduce calculation complexity of $OBSS\_PD_{level}$.

Optionally, $Rx\_PWR_{dBm/20MHz} = Rx\_PWR_{nonpunc-measured,\ total} - 10 \times log_{10} N_{nonpunc-measured}$.

$Rx\_PWR_{dBm/20MHz}$ is the first signal strength level, $Rx\_PWR_{nonpunc-measured,total}$ is a sum of the signal strength measurement results of the plurality of nonpunctured 20 MHz subchannels in the PPDU, and $N_{nonpunc-measured}$ is a number of the plurality of nonpunctured 20 MHz subchannels measured.

In a possible implementation, the first signal strength level is obtained based on a signal strength measurement result of a nonpunctured 20 MHz subchannel in the PPDU, and the nonpunctured 20 MHz subchannel is a primary 20 MHz channel. Based on this optional implementation, when preamble puncturing occurs in the PPDU, the first device can accurately/feasibly obtain the first signal strength level.

In a possible implementation, the first signal strength level is obtained based on a signal strength measurement result of a nonpunctured 20 MHz subchannel in the PPDU, and the nonpunctured 20 MHz subchannel is a 20 MHz subchannel that is not punctured in the PPDU and that is specified in advance in a standard. Based on this optional implementation, when preamble puncturing occurs in the PPDU, the first device can accurately/feasibly obtain the first signal strength level.

In a possible implementation, the first signal strength level is obtained based on a signal strength measurement result of a nonpunctured 20 MHz subchannel in the PPDU, and the nonpunctured 20 MHz subchannel is a 20 MHz channel on which the first device operates. Based on this optional implementation, when preamble puncturing occurs in the PPDU, the first device can accurately/feasibly obtain the first signal strength level.

In a possible implementation,

$$OBSS\_PD_{level} \leq \max(OBSS\_PD_{min},\ \min(OBSS\_PD_{max},\ OBSS\_PD_{min} + (TX\_PWR_{ref} - TX\_PWR))).$$

$OBSS\_PD_{level}$ is the OBSS PD level, $OBSS\_PD_{min}$ and $OBSS\_PD_{max}$ are respectively a minimum value and a maximum value of $OBSS\_PD_{level}$, $TX\_PWR_{ref}$ is a reference power, and $TX\_PWR$ is a transmit power at which the second device sends the PPDU.

Based on this possible implementation, first signal strength is obtained through measurement on a nonpunctured 20 MHz subchannel of a PPDU, or first signal strength is obtained by normalizing signal measurement results of a plurality nonpunctured 20 MHz subchannels of a PPDU, in other words, a unit of the first signal strength is decibel-milliwatt dBm/20 MHz. In addition, units of $OBSS\_PD_{min}$ and $OBSS\_PD_{max}$ are also dBm/20 MHz; in this case, for different bandwidths of the PPDU, $OBSS\_PD_{level}$ does not need to be further normalized. This helps reduce calculation complexity of $OBSS\_PD_{level}$.

According to a second aspect, this application provides a first device, and the first device may perform the method in the first aspect. A function of the first device may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effect thereof, refer to the method in the first aspect and the beneficial effect thereof.

According to a third aspect, this application provides a first device. The first device includes a processor, a memory, and a transceiver. The memory is configured to store a computer program, the transceiver is configured to send and receive data, and the processor is configured to execute the computer program stored in the memory, to implement the method in the first aspect.

According to a fourth aspect, this application provides a chip. The chip includes a processor and an interface. The processor is coupled to the interface. The interface is configured to receive or output a signal. The processor is configured to execute code instructions, so that the method in the first aspect is performed.

According to a fifth aspect, this application further provides a computer-readable storage medium. The computer-readable storage medium stores computer-executable instructions, and when the computer-executable instructions are invoked by a computer, the computer is enabled to perform the method in the first aspect.

According to a sixth aspect, this application further provides a computer program product including instructions. The computer program product includes computer program code. When the computer program code is run on a computer, the computer is enabled to perform the method in the first aspect.

**BRIEF DESCRIPTION OF DRAWINGS**

FIG. 1 is a schematic diagram of a system architecture according to this application;
FIG. 2(a) and FIG. 2(b) each are a schematic diagram in which a frequency band on which a first device operates does not totally overlap a frequency band on which a second device operates according to this application;
FIG. 3 is a schematic diagram of a spatial reuse method according to this application;
FIG. 4 is a schematic diagram of PPDU transmission according to this application;
FIG. 5 is a schematic diagram of a primary channel according to this application;
FIG. 6 is a schematic diagram of a structure of a communication apparatus according to this application;
FIG. 7 is a schematic diagram of a structure of another communication apparatus according to this application; and
FIG. 8 is a schematic diagram of a structure of a chip apparatus according to this application.

**DESCRIPTION OF EMBODIMENTS**

The following further describes specific embodiments of this application in detail with reference to accompanying drawings.

In the specification, claims, and accompanying drawings of the present invention, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a specific feature, structure, or characteristic described with reference to the embodiment may be included in at least one embodiment of the present invention. The phrase shown in various locations in the specification may not necessarily mean a same embodiment, and is not an independent or alternative embodiment exclusive from another embodiment. It is explicitly and implicitly understood by a person skilled in the art that embodiments described in the specification may be combined with another embodiment.

"A plurality of" means two or more than two. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

Embodiments of this application provide a spatial reuse method and a first device. The method provided in embodiments of this application is applied to a wireless communication system. The wireless communication system may be a wireless local area network (wireless local area network, WLAN) or a cellular network, and the method may be implemented by a first device in the wireless communication system or a chip or a processor in the first device. In the wireless local area network, the first device supports communication performed by using IEEE 802.11 series protocols, and the IEEE 802.11 series protocols include: 802.11be, 802.11ax, or 802.11a/b/g/n/ac.

The following first describes a system architecture to which embodiments of this application may be applied.

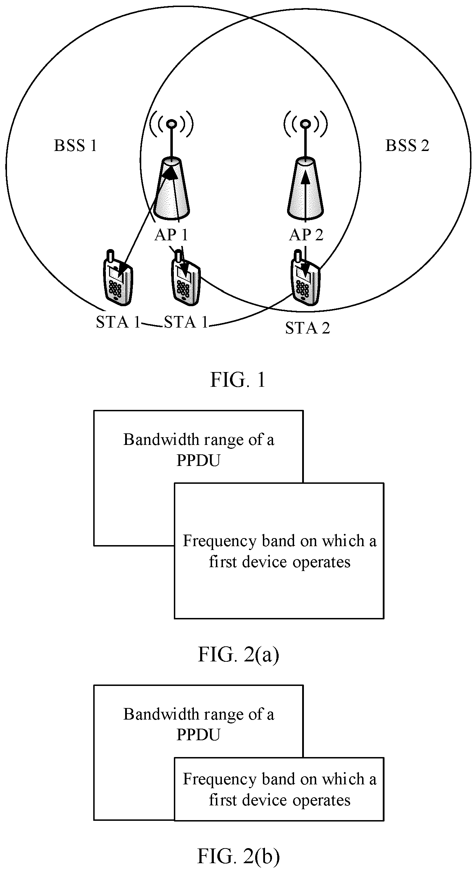

FIG. 1 is a schematic diagram of a system architecture according to an embodiment of this application. As shown in FIG. 1, the system architecture includes a BSS 1 and a BSS 2. The BSS 1 includes an AP 1 and a plurality of STAs 1. The BSS 2 includes an AP 2 and a STA 2. If a basic service set (BSS) unassociated with a station and a BSS associated with the station operate on a same frequency band (also referred to as a channel), and the unassociated BSS is (partially or entirely) in a basic service area of the associated BSS, the unassociated BSS is referred to as an OBSS of the station. In this case, as shown in FIG. 1, the BSS 1 and the BSS 2 are OBSSs of each other. To be specific, the BSS 2 is the OBSS of the BSS 1, and the BSS 1 is the OBSS of the BSS 2.

Because basic service areas of the BSS 1 and the BSS 2 partially overlap, as shown in FIG. 1, when the AP 1 and the STA 1 that are in the BSS 1 perform data transmission, the AP 2 in the BSS 2 may receive information sent by the AP 1 and the STA 1. Similarly, when the AP 2 and the STA 2 that are in the BSS 2 perform data transmission, the AP 1 in the BSS 1 may receive information sent by the AP 2 and the STA 2.

The AP may be an AP used by a terminal device (for example, a mobile phone) to access a wired (or wireless) network, and is mainly deployed at home, in a building, and in a park. A typical coverage radius is tens of meters to a hundred meters. Certainly, the access point may also be deployed outdoors. The AP is equivalent to a bridge that connects the wired network and the wireless network. The AP is mainly used to connect wireless network clients to each other, and then connect the wireless network to the Ethernet. Specifically, the AP may be a terminal device (for example, a mobile phone) or a network device (for example, a router) with a wireless fidelity (wireless fidelity, Wi-Fi) chip. The AP may be a device that supports the 802.11be standard. The AP may also be a device that supports a plurality of current and future wireless local area network (wireless local area network WLAN) 802.11 family standards, such as 802.11ax, 802.11ac, 802.11n, 802.11g, 802.11b, and 802.11a.

The STA may also be referred to as a non-access point station (non-Access Point Station, non-AP STA). For ease of description, the following uses the STA as an example for description. The STA may be a wireless communication chip, a wireless sensor, a wireless communication terminal, or the like. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11be standard. The STA may also support a plurality of current and future wireless local area network (wireless local area network, WLAN) 802.11 family standards, such as 802.11ax, 802.11ac, 802.11n, 802.11g, 802.11b, and 802.11a.

For example, the AP and the STA may be devices used in an Internet of Vehicles, Internet of Things nodes, sensors, or the like in an Internet of Things (internet of things, IoT), smart cameras, smart remote controls, smart water or electricity meters, or the like in smart home, or sensors in smart city.

It should be understood that FIG. 1 shows two APs and three STAs for illustration purposes only. Embodiments of this disclosure may be extended to be applied to another number of APs that may communicate with any appropriate number of other devices.

If the AP 1 transmits a PPDU (physical layer protocol data unit, PPDU) 1 to the STA 1, because basic service areas of the BSS 1 and the BSS 2 partially overlap, the AP 2 may also receive the PPDU 1 sent by the AP 1. In an OBSS packet detection-based (OBSS PD-based, PD: packet detection) spatial reuse method, one of requirements for performing OBSS PD-based spatial reuse by the AP 2 is that a signal strength level (received signal strength level) of the PPDU 1 received by the AP 2 on an entire bandwidth is less than an OBSS PD level. The OBSS PD level may be determined according to the following formula (1):

$$OBSS\_PD_{level} \leq \max\left(OBSS_{PD\,min}, \min\left(OBSS_{PD\,max}, OBSS_{PD\,min} + \left(TX_{PWR\,ref} - TX_{PWR}\right)\right)\right) + log_{10}(PPDU\_BW/20MHz) \tag{1}$$

$OBSS\_PD_{level}$ is the OBSS PD level. $OBSS\_PD_{min}$ and $OBSS\_PD_{max}$ are respectively a minimum value and a maximum value of $OBSS\_PD_{level}$, and are specified in advance in a standard or indicated by the AP. $TX\_PWR_{ref}$ is a reference power. For the STA, the reference power is 21 dBm. For the AP, the reference power is 21 dBm or 25 dBm based on different cases. $TX\_PWR$ is a transmit power at which the AP 2 sends the PPDU. $PPDU\_BW$ is the entire bandwidth of the PPDU 1 received by the AP 2.

As shown in FIG. 2(a) and FIG. 2(b), when a frequency band on which a first device operates does not totally overlap a bandwidth range of a PPDU received by the first device, the first device cannot obtain a signal strength level of an entire bandwidth of the PPDU when receiving the PPDU sent by the second device. In addition, when preamble puncturing occurs in the PPDU, or the first device cannot obtain complete preamble puncturing information of the first device, the first device cannot obtain the signal strength level of the entire bandwidth of the PPDU. In these several cases, because the AP 2 cannot successfully measure the signal strength level of the PPDU 1 on the entire bandwidth, the AP 2 cannot determine whether to perform OBSS PD-based spatial reuse. This reduces throughput of an entire system.

In view of this, an embodiment of this disclosure provides an improved spatial reuse method. The following describes in detail the spatial reuse method provided in embodiments of this application.

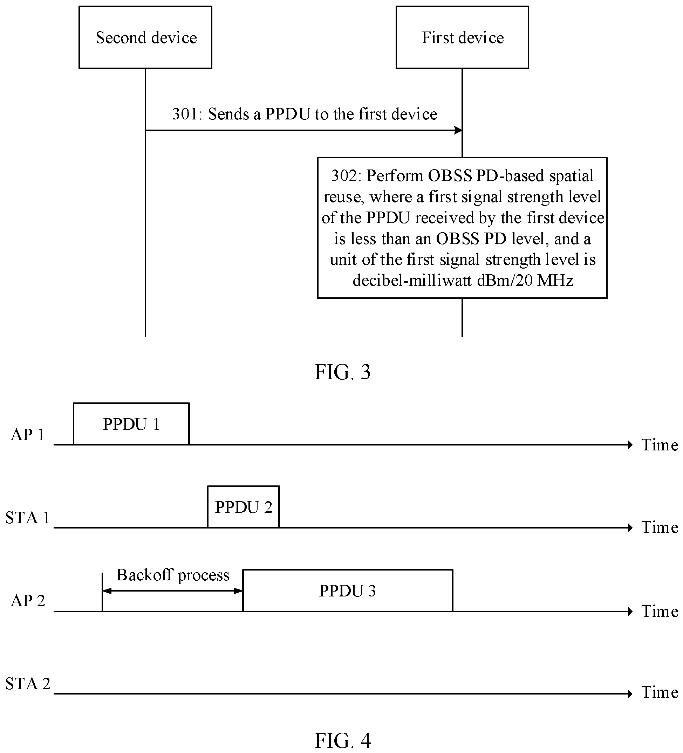

FIG. 3 is a schematic flowchart of a spatial reuse method according to an embodiment of this application. As shown in FIG. 3, the spatial reuse method includes the following step 301 and step 302. The method shown in FIG. 3 may be performed by a first device. Alternatively, the method shown in FIG. 3 may be performed by a chip in a first device. FIG. 3 is described by using an example in which the method is performed by the first device. It should be noted that the first device in this embodiment of this application may be the AP 2 or the STA 2 shown in FIG. 1, and the first device in the following may be the AP 1 or the STA 1 shown in FIG. 1.

301: A second device sends a PPDU to the first device, where a bandwidth of the PPDU includes a plurality of 20 MHz subchannels. Correspondingly, the first device may receive the PPDU sent by the second device.

The second device may be one device, or may be a plurality of devices. The plurality of second devices may simultaneously send one PPDU, or may respectively send a plurality of PPDUs.

For example, as shown in FIG. 4, it is assumed that the second device includes an AP 1 and a STA 1, and the first device is an AP 2.

1. The AP 1 may send a PPDU 1 to the STA 1.
2. The AP 2 may also receive the PPDU 1. After receiving the PPDU 1 sent by the AP 1, the AP 2 identifies that the PPDU 1 is from an OBSS. An OBSS PD-based spatial reuse mechanism is triggered to perform a backoff (backoff, BO) process at a maximum transmit power 1. A value of a backoff counter starts to decrease until the PPDU 1 is received.
3. The STA 1 may send a PPDU 2 to the AP 1.
4. The AP 2 may also receive the PPDU 2. After receiving the PPDU 2 sent by the STA 1, the AP 2 triggers an OBSS PD-based spatial reuse mechanism, and performs a backoff process at a maximum transmit power 2.

After receiving the PPDU 1 sent by the AP 1, the AP 2 may further detect first signal strength 1 of the PPDU 1, to determine whether the AP 2 can perform OBSS PD-based spatial reuse. After receiving the PPDU 2 sent by the STA 1, the AP 2 may further detect first signal strength 2 of the PPDU 2, to determine whether the AP 2 can perform OBSS PD-based spatial reuse. If the first signal strength 1 of the PPDU 1 is less than an OBSS PD level 1, and the first signal strength 2 of the PPDU 2 is less than an OBSS PD level 2, after the backoff counter reaches 0, the AP 2 sends a PPDU 3 by using a smaller value of the maximum transmit power 1 and the maximum transmit power 2, to perform OBSS PD-based spatial reuse.

302: The first device performs OBSS PD-based spatial reuse, where a first signal strength level of the PPDU received by the first device is less than an OBSS PD level, and a unit of the first signal strength level is decibel-milliwatt dBm/20 MHz.

That the unit of the first signal strength level is dBm/20 MHz means that the first signal strength level is based on a granularity of 20 MHz. For example, the first signal strength level is a signal strength level measured on a single 20 MHz subchannel. Alternatively, the first signal strength level is a value obtained by normalizing a plurality of 20 MHz signal strength measurement results in a unit of 20 MHz.

In this embodiment of this application, after receiving the PPDU sent by the second device, the first device may measure the first signal strength level of the PPDU. The PPDU may include one or more of the following fields for determining a physical layer clear channel access indication (PHY-CCA.indication): an L-STF field (legacy-short training field, Legacy Short Training Field), an L-LTF field (legacy-long training field, Legacy Long Training Field), a physical layer synchronization (PHY SYNC) field, a short synchronization (shortSYNC) field, or a long physical layer synchronization (Long PHY SYNC) field. The first device may measure signal strength of one or more fields that are in the PPDU and that are used to determine the physical layer clear channel access indication, to determine the first signal strength level in dBm/20 MHz. (The corresponding description in English is: The received signal strength level, in dBm/20 MHz, which is measured from the L-STF or L-LTF fields in least one of the nonpunctured 20 MHz subchannels of the PPDU or the PHY SYNC field, shortSYNC field or Long PHY SYNC field, whichever exists(#24235) and which is used to determine PHY-CCA.indication, is below the non-SRG OBSS PD level.)

After the first device determines the first signal strength level in dBm/20 MHz, the first device can perform OBSS PD-based spatial reuse only when the first signal strength level of the PPDU is less than the OBSS PD level, and the first device cannot perform OBSS PD-based spatial reuse when the first signal strength level of the PPDU is greater than or equal to the OBSS PD level. A unit of the OBSS PD level is also dBm/20 MHz.

In the method described in FIG. 3, the first device measures the first signal strength level of the PPDU in dBm/20 MHz. When the first device cannot receive all 20 MHz subchannels of the entire bandwidth of the PPDU, preamble puncturing occurs, or complete preamble puncturing information cannot be obtained, a signal strength level of the PPDU can still be successfully measured. Compared with a technology that is for measuring a signal strength level based on an entire bandwidth and that cannot operate or be implemented in these scenarios, a technology that is for measuring a signal strength level based on a granularity of 20 MHz in this embodiment of this application can be implemented in these scenarios. This increases a feasible scenario in which OBSS PD-based spatial reuse can be performed, and improves throughput of an entire system. In addition, the IEEE 802. 1 The standard uses a mechanism of performing physical layer clear channel access indication (clear channel access, CCA) detection on the 20 MHz subchannels one by one to determine whether a channel is idle or busy, and the first signal strength level is also obtained by measuring one or more 20 MHz subchannels. Therefore, the method described in FIG. 3 is compatible with the IEEE 802.11be standard.

In a possible implementation, the bandwidth of the sent PPDU includes a plurality of 20 MHz subchannels, none of the plurality of 20 MHz subchannels is punctured, and the first channel strength level is obtained through measurement based on signal strength of the plurality of 20 MHz subchannels in the PPDU.

In a possible implementation, the first signal strength level is obtained based on signal strength measurement results of the plurality of nonpunctured 20 MHz subchannels in the PPDU.

In this possible implementation, the first device may specifically measure signal strength of a field that is on the plurality of nonpunctured 20 MHz subchannels in the PPDU and that is used to determine the physical layer clear channel access indication, to obtain the signal strength measurement results of the plurality of nonpunctured 20 MHz subchannels in the PPDU. The plurality of nonpunctured 20 MHz subchannels may be all or some of nonpunctured 20 MHz subchannels in the PPDU.

For example, it is assumed that the bandwidth of the PPDU received by the first device is 160 MHz, the PPDU has six nonpunctured 20 MHz subchannels, and the first device receives three nonpunctured 20 MHz subchannels of the PPDU in an 80 MHz channel on which the first device operates. In this case, the first device may measure signal strength of the three nonpunctured 20 MHz subchannels received. Alternatively, the first device may measure signal strength of some of the three nonpunctured 20 MHz subchannels received.

If the signal strength measurement results of the plurality of 20 MHz subchannels are normalized to obtain the first signal strength level, the plurality of 20 MHz subchannels include a punctured 20 MHz subchannel, and no energy may be transmitted on the punctured 20 MHz subchannel, the obtained first signal strength level is inaccurate, or there may be another signal or interference on the punctured 20 MHz subchannel. As a result, the first signal strength level cannot be accurately measured. Therefore, the punctured 20 MHz subchannel needs to be excluded, to accurately trigger the first device to perform OBSS PD-based spatial reuse.

In the foregoing formula (1), $OBSS\_PD_{level}$ is a threshold relative to an entire bandwidth of the PPDU 1. When $OBSS\_PD_{level}$ is determined, $+log_{10}(PPDU\_BW/20MHz)$ at the end of the formula is to perform normalization when the bandwidth of the PPDU 1 is greater than 20 MHz, that is, a value on the right side of the formula (1) may be relative to the entire bandwidth of the PPDU 1 based on $+log_{10}(PPDU\_BW/20MHz)$. Preamble puncturing is not considered in this normalization. For example, the bandwidth of the PPDU 1 is 80 MHz. If preamble puncturing is performed on one of the 20 MHz subchannels, three 20 MHz subchannels in four 20 MHz subchannels have energy for transmission, and one 20 MHz subchannel is punctured. In this case, a number of subchannels that need to be normalized is 3 instead of 4. It is obvious that in this example, a number of normalized subchannels in formula (1) is 4. Therefore, according to formula (1), the AP 2 cannot be accurately triggered to perform OBSS PD-based spatial reuse. In addition, formula (1) is incorrect. A log value should be multiplied by 10.

Optionally, the first signal strength level is obtained by normalizing the signal strength measurement results of the plurality of nonpunctured 20 MHz subchannels in the PPDU. Based on this possible implementation, the determined first signal strength level can be more accurate.

Optionally, the first signal strength level meets the following formula:

$$Rx\_PWR_{dBm/20MHz} = Rx\_PWR_{nonpunc\text{-}measured,\ total} - 10 \times log_{10}N_{nonpunc\text{-}measured}$$

$Rx\_PWR_{dBm/20MHz}$ is the first signal strength level, $Rx\_PWR_{nonpunc\text{-}measured,total}$ is a sum of the signal strength measurement results of the plurality of nonpunctured 20 MHz subchannels in the PPDU, and $N_{nonpunc\text{-}measured}$ is a number of the plurality of nonpunctured 20 MHz subchannels measured.

For example, it is assumed that the first signal strength level is obtained based on signal strength measurement results of a nonpunctured 20 MHz subchannel 1 and a nonpunctured 20 MHz subchannel 2 in the PPDU. The signal strength measurement result of the nonpunctured 20 MHz subchannel 1 is 10 dBm/20 MHz, and the signal strength measurement result of the nonpunctured 20 MHz subchannel 2 is 20 dBm/20 MHz. In this case, $Rx\_PWR_{nonpunc\text{-}measured,total}$ is 30 dBm/20 MHz. $N_{nonpunc\text{-}measured}$ is 2.

A condition for performing OBSS PD-based spatial reuse transmission may also be deduced according to each

7

formula. For example, another condition for performing OBSS PD-based spatial reuse transmission may be that the following formula (3) is met:

$$Rx_{PWR_{nonpunc-measured,total}} < OBSS_{PD_{level}} + 10 \times log_{10} N_{nonpunc-measured} \qquad (3)$$

Optionally, the first device determines to: first obtain puncturing information of the PPDU, determine, based on the puncturing information, which 20 MHz subchannels in the PPDU are nonpunctured subchannels, and then measure signal strength of the nonpunctured 20 MHz subchannels in the PPDU. Based on this optional implementation, when preamble puncturing occurs in the PPDU, the first device can accurately/feasibly obtain the first signal strength.

For example, when the PPDU is an HE MU (multiple user, multiple user) PPDU, puncturing information of the HE MU PPDU may be implicitly carried in a bandwidth field in the HE MU PPDU. Because some puncturing information is carried, puncturing information of the entire bandwidth cannot be provided. The puncturing information is not carried in an HE SU PPDU and an HE TB PPDU.

When the PPDU is an EHT MU PPDU, in non-OFDMA transmission of the EHT MU PPDU, the puncturing information of the entire bandwidth exists in a punctured channel information (punctured channel information) field in a U-SIG field of the EHT MU PPDU.

When the PPDU is an EHT MU PPDU, in OFDMA transmission of the EHT MU PPDU, puncturing information in an 80 MHz frequency subblock in which the PPDU is located exists in a punctured channel information field in a U-SIG field of the EHT MU PPDU, and the puncturing information of the entire bandwidth exists in an EHT-SIG field of the EHT MU PPDU.

When the PPDU is a beacon frame, a disabled subchannel bitmap (Disabled subchannel bitmap) exists in the beacon frame, and indicates information about some subchannels that need to be punctured.

Optionally, the first device may alternatively determine, through blind detection, which 20 MHz subchannels are nonpunctured subchannels, and then measure signal strength of the nonpunctured 20 MHz subchannels in the PPDU. Based on this optional implementation, when preamble puncturing occurs in the PPDU, the first device can accurately/feasibly obtain the first signal strength.

Optionally, the plurality of nonpunctured 20 MHz subchannels are located on a primary channel. The primary channel may be a primary 20 MHz channel, a primary 40 MHz channel, a primary 80 MHz channel, or a primary 160 MHz channel. Based on this optional implementation, when preamble puncturing occurs in the PPDU, the first device can accurately/feasibly obtain the first signal strength.

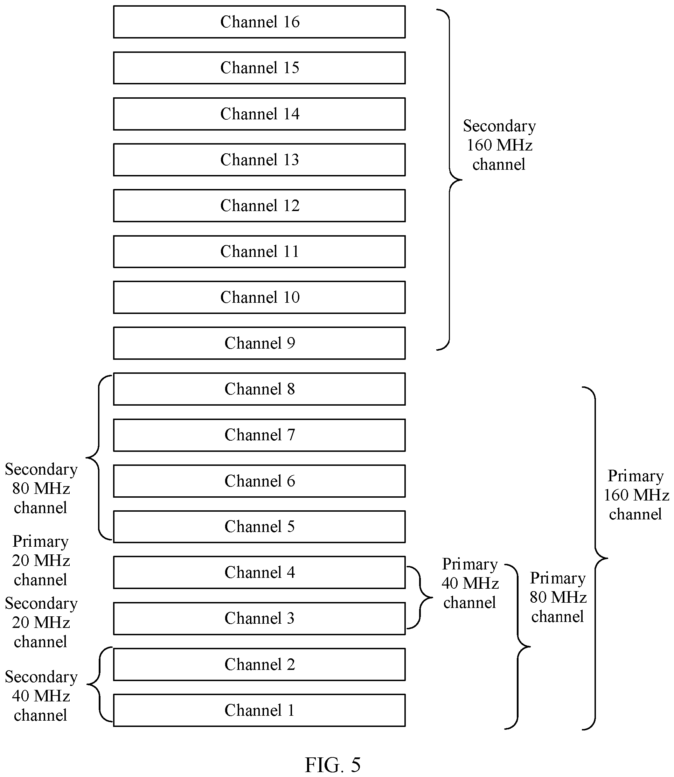

The primary 20 MHz channel may be any channel in the entire bandwidth, and there is no fixed relationship. For example, the bandwidth is 320 MHz. As shown in FIG. 5, a 40 MHz channel including the primary 20 MHz channel is referred to as a primary 40 MHz channel. An 80 MHz channel including the primary 20 MHz channel is referred to as a primary 80 MHz channel. A 160 MHz channel including the primary 20 MHz channel is referred to as a primary 160 MHz channel.

Optionally, the plurality of nonpunctured 20 MHz subchannels may alternatively be 20 MHz subchannels that are not punctured in the PPDU and that are specified in advance in a standard. Based on this optional implementation, when preamble puncturing occurs in the PPDU, the first device can accurately/feasibly obtain the first signal strength.

Optionally, the plurality of nonpunctured 20 MHz subchannels are a plurality of 20 MHz channels on which the first device operates. Based on this optional implementation, the first signal strength level obtained through measurement can be more accurate.

For example, it is assumed that the bandwidth of the PPDU received by the first device is 160 MHz, the PPDU has six nonpunctured 20 MHz subchannels, and the first device receives three nonpunctured 20 MHz subchannels of the PPDU in an 80 MHz channel on which the first device operates. In this case, the first device may measure signal strength of the three nonpunctured 20 MHz subchannels received, or the first device may measure signal strength of some of the three nonpunctured 20 MHz subchannels received.

In a possible implementation, the first signal strength level is obtained based on a signal strength measurement result of a nonpunctured 20 MHz subchannel in the PPDU, and the nonpunctured 20 MHz subchannel is a primary 20 MHz channel.

Because the primary 20 MHz channel is not punctured, the first signal strength level is obtained based on measurement of the primary 20 MHz channel. When preamble puncturing occurs in the PPDU, the first device can accurately/feasibly obtain the first signal strength.

In a possible implementation, the first signal strength level is obtained based on a signal strength measurement result of a nonpunctured 20 MHz subchannel in the PPDU, and the nonpunctured 20 MHz subchannel is a 20 MHz subchannel that is not punctured in the PPDU and that is specified in advance in a standard.

In a possible implementation, the first signal strength level is obtained based on a signal strength measurement result of a nonpunctured 20 MHz subchannel in the PPDU, and the nonpunctured 20 MHz subchannel is a 20 MHz channel on which the first device operates.

In this embodiment of this application, specific nonpunctured 20 MHz subchannels on which signal strength is measured is determined based on a specific implementation. This is not limited in this embodiment of this application.

In a possible implementation, the OBSS PD level meets the following formula:

$$OBSS\_PD_{level} \leq \max(OBSS\_PD_{min}, \min(OBSS\_PD_{max}, OBSS\_PD_{min} + (TX\_PWR_{ref} - TX\_PWR)))$$

$OBSS\_PD_{level}$ is the OBSS PD level. $OBSS\_PD_{min}$ and $OBSS\_PD_{max}$ are respectively a minimum value and a maximum value of $OBSS\_PD_{level}$, and are specified in advance in a standard or indicated by the AP. $TX\_PWR_{ref}$ is a reference power. For the STA, the reference power is 21 dBm. For the AP, the reference power is 21 dBm or 25 dBm based on different cases. $TX\_PWR$ is a transmit power at which the first device sends the PPDU.

Based on this possible implementation, first signal strength is obtained through measurement on a nonpunctured 20 MHz subchannel of a PPDU, or first signal strength is obtained by normalizing signal measurement results of a plurality nonpunctured 20 MHz subchannels of a PPDU, in other words, a unit of the first signal strength is decibel-milliwatt dBm/20 MHz. In addition, units of $OBSS\_PD_{min}$ and $OBSS\_PD_{max}$ are also dBm/20 MHz; in this case, for different bandwidths of the PPDU, $OBSS\_PD_{level}$ does not need to be further normalized. This helps reduce calculation complexity of $OBSS\_PD_{level}$.

In a possible implementation, $TX\_PWR$ meets the following formula:

$$TX\_PWR \begin{cases} No\ limit, & If\ OBSS\_PD_{level} \leq OBSS\_PD_{min} \\ TX\_PWR_{ref} - (OBSS\_PD_{level} - OBSS\_PD_{max}), & If\ OBSS\_PD_{max} \geq OBSS\_PD_{level} \geq OBSS\_PD_{min} \end{cases}$$

$$(5)$$

$OBSS\_PD_{level}$ in formula (5) is $OBSS\_PD_{level}$ that is defined in this solution of the present invention and whose unit is dBm/20 MHz.

It should be noted herein that, in a case of no limit, a sending device also needs to comply with a maximum transmit power limited by regulations.

It should be noted that OBSS PD-based spatial reuse may be further classified into two types: a non-SRG (non-spatial reuse group) OBSS PD level and an SRG OBSS PD level. Different OBS PD levels are used depending on whether an SR group is set up. However, transmission processes of the different OBS PD levels are basically the same, and the foregoing method can be used in different cases.

It should be noted that, in all embodiments of this application, an example in which a unit bandwidth is 20 MHz is used for description, and the unit of the first signal strength level is dBm/20 MHz. If the unit bandwidth is another value, for example, X MHz, the unit of the first signal strength level in all the embodiments of this application can be synchronously replaced with dBm/X MHz. For example, in the IEEE 802.11ah standard, X=2 MHz. In the IEEE 802.11ad/ay standard, X=2160 MHz.

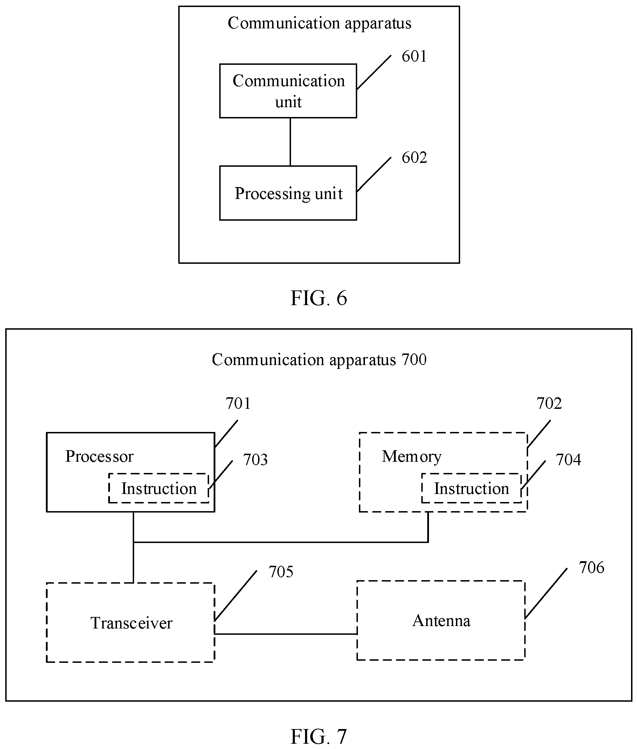

FIG. 6 is a schematic diagram of a structure of a communication apparatus according to an embodiment of this application. The communication apparatus shown in FIG. 6 may be configured to perform some or all functions of the first device in the method embodiment described in FIG. 3. The apparatus may be a first device, an apparatus in the first device, or an apparatus that can be used together with the first device. The communication apparatus may alternatively be a chip system. The communication apparatus shown in FIG. 6 may include a communication unit 601 and a processing unit 602. The processing unit 602 is configured to process data. The communication unit 601 is integrated with a receiving unit and a sending unit. The communication unit 601 may also be referred to as a transceiver unit. Alternatively, the communication unit 601 may be split into a receiving unit and a sending unit.

The communication unit 601 is configured to receive a physical layer protocol data unit PPDU sent by a second device, where a bandwidth of the PPDU includes a plurality of 20 megahertz MHz subchannels. The communication unit 601 is further configured to perform overlapping basic service set packet detection OBSS PD-based spatial reuse, where a first signal strength level of the PPDU received by the first device is less than an OBSS PD level, and a unit of the first signal strength level is decibel-milliwatt dBm/20 MHz.

In a possible implementation, the first signal strength level is obtained based on signal strength measurement results of a plurality of nonpunctured 20 MHz subchannels in the PPDU.

In a possible implementation, the plurality of nonpunctured 20 MHz subchannels are located on a primary channel.

In a possible implementation, the first signal strength level is obtained by normalizing signal strength measurement results of a plurality of nonpunctured 20 MHz subchannels in the PPDU.

In a possible implementation, $Rx\_PWR_{dBm/20MHz} = Rx\_PWR_{nonpunc-measured,total} - 10 \times log_{10} N_{nonpunc-measured}$.

$Rx\_PWR_{dBm/20MHz}$ is the first signal strength level, $Rx\_PWR_{nonpunc-measured,total}$ is a sum of the signal strength measurement results of the plurality of nonpunctured 20 MHz subchannels in the PPDU, and $N_{nonpunc-measured}$ is a number of the plurality of nonpunctured 20 MHz subchannels measured.

In a possible implementation, the first signal strength level is obtained based on a signal strength measurement result of a nonpunctured 20 MHz subchannel in the PPDU, and the nonpunctured 20 MHz subchannel is a primary 20 MHz channel or a 20 MHz channel on which the first device operates.

In a possible implementation,

$$OBSS\_PD_{level} \leq \max\left(OBSS\_PD_{min}, \min\left(OBSS\_PD_{max}, OBSS\_PD_{min} + (TX\_PWR_{ref} - TX\_PWR)\right)\right)$$

$OBSS\_PD_{level}$ is the OBSS PD level, $OBSS\_PD_{min}$ and $OBSS\_PD_{max}$ are respectively a minimum value and a maximum value of $OBSS\_PD_{level}$, $TX\_PWR_{ref}$ is a reference power, and $TX\_PWR$ is a transmit power at which the second device sends the PPDU.

FIG. 7 is a schematic diagram of a structure of a communications apparatus. The communication apparatus 700 may be the first device in the foregoing method embodiment, or may be a chip, a chip system, a processor, or the like that supports the first device in implementing the foregoing method. The communication apparatus may be configured to implement the method described in the foregoing method embodiment. For details, refer to the description in the foregoing method embodiment.

The communication apparatus 700 includes one or more processors 701. The processor 701 may be a general-purpose processor, a dedicated processor, or the like. For example, the processor 701 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 700 may include one or more memories 702. The memory may store instructions 704, and the instructions may be run on the processor 701, so that the communication apparatus 700 performs the method described in the foregoing method embodiment. Optionally, the memory 702 may further store data. The processor 701 and the memory 702 may be separately disposed, or may be integrated together.

Optionally, the communication apparatus 700 may further include a transceiver 705 and an antenna 706. The transceiver 705 may be referred to as a transceiver unit, a transceiver, a transceiver circuit, or the like, and is configured to implement a transceiver function. The transceiver 705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 602 shown in FIG. 6 may be the processor 701. The communication unit 601 may be a transceiver 705.

The communication apparatus 700 is the first device, and the processor 701 is configured to perform a data processing operation of the first device in the foregoing method embodiment. The transceiver 705 is configured to perform a data receiving and sending operation performed by the first device in the foregoing method embodiment. For example, the transceiver 705 may be configured to perform the data receiving and sending operation performed by the first device in FIG. 3.

In another possible design, the processor 701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 701 may store instructions 703, and the instructions 703 are run on the processor 701, the communication apparatus 700 is enabled to perform the method described in the foregoing method embodiment. The instructions 703 may be fixed in the processor 701. In this case, the processor 701 may be implemented by hardware.

In still another possible design, the communication apparatus 700 may include a circuit. The circuit may implement a sending, receiving, or communication function in the foregoing method embodiment. The processor and the transceiver that are described in this embodiment of this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the first device. However, a scope of the communication apparatus described in this embodiment of this application is not limited thereto, and a structure of the communication apparatus may not be limited by FIG. 7. The communication apparatus may be an independent device or may be a part of a large device. For example, the communication apparatus may be:

(1) an independent integrated circuit IC, a chip, or a chip system or subsystem;
(2) a set of one or more ICs, where optionally, the IC set may further include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

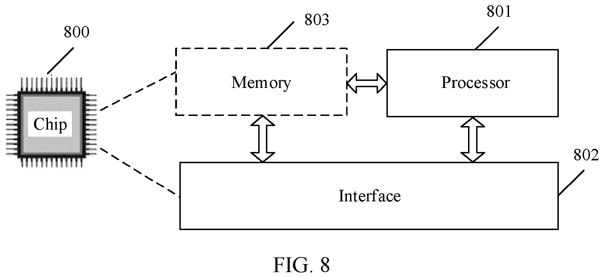

When the communication apparatus may be a chip or a chip system, refer to a schematic diagram of a structure of a chip shown in FIG. 8. The chip 800 shown in FIG. 8 includes a processor 801 and an interface 802. Optionally, the chip may further include a memory 803. There may be one or more processors 801, and there may be a plurality of interfaces 802.

In a design, for a case in which the chip is configured to implement a function of the first terminal device in embodiments of this application,

the interface 802 is configured to receive or output a signal. For example, the interface 802 may be configured to perform a signal receiving or output operation of the first device in FIG. 3.

The processor 801 is configured to perform a data processing operation of the first device.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the communication apparatus provided in embodiments of this application may also implement these features or functions. Details are not described herein again.

It should be understood that, the processor in embodiments of this application may be an integrated circuit chip, and has a signal processing capability. In an implementation process, the steps in the foregoing method embodiment may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and method described in this specification includes but is not limited to these and any memory of another proper type.

This application further provides a computer-readable medium. A storage medium stores a computer program or instructions. When the computer program or the instructions are executed by a communication apparatus, functions of any one of the foregoing method embodiments are implemented.

This application further provides a computer program product including instructions. When a computer reads and executes the computer program product, the computer is enabled to implement functions of any one of the foregoing method embodiments.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A spatial reuse method, wherein the method comprises:

    receiving, by a first device, a physical layer protocol data unit PPDU sent by a second device, wherein a bandwidth of the PPDU comprises a plurality of 20 megahertz MHz subchannels; and
    performing, by the first device, overlapping basic service set packet detection OBSS PD-based spatial reuse, wherein a first signal strength level of the PPDU received by the first device is less than an OBSS PD level, and a unit of the first signal strength level is decibel-milliwatt dBm/20 MHz.

2.  The method according to claim 1, wherein the first signal strength level is obtained based on signal strength measurement results of a plurality of nonpunctured 20 MHz subchannels in the PPDU.

3.  The method according to claim 2, wherein the plurality of nonpunctured 20 MHz subchannels are located on a primary channel.

4.  The method according to claim 2 or 3, wherein the first signal strength level is obtained by normalizing the signal strength measurement results of the plurality of nonpunctured 20 MHz subchannels in the PPDU.

5.  The method according to claim 4, wherein

    $$Rx\_PWR_{dBm/20MHz} = Rx\_PWR_{nonpunc-measured,total} - 10 \times log_{10} N_{nonpunc-measured} \quad ,$$

    wherein
    $Rx\_PWR_{dBm/20MHz}$ is the first signal strength level, $Rx\_PWR_{nonpunc-measured,total}$ is a sum of the signal strength measurement results of the plurality of nonpunctured 20 MHz subchannels in the PPDU, and $N_{nonpunc-measured}$ is a number of the plurality of nonpunctured 20 MHz subchannels measured.

6.  The method according to claim 1, wherein the first signal strength level is obtained based on a signal strength measurement result of a nonpunctured 20 MHz subchannel in the PPDU, and the nonpunctured 20 MHz subchannel is a primary 20 MHz channel or a 20 MHz channel on which the first device operates.

7.  The method according to any one of claims 1 to 6, wherein

    $OBSS\_PD_{levle} \leq$ max($OBSS\_PD_{min}$, min($OBSS\_PD_{max}$ + (TX_PWR$_{ref}$ - TX_PWR))),

wherein *OBSS_PD*$_{level}$ is the OBSS PD level, *OBSS_PD*$_{min}$ and *OBSS_PD*$_{max}$ are respectively a minimum value and a maximum value of *OBSS_PD*$_{level}$, *TX_PWR*$_{ref}$ is a reference power, and *TX_PWR* is a transmit power at which the second device sends the PPDU.

**8.** A first device, wherein the first device comprises:

a communication unit, configured to receive a physical layer protocol data unit PPDU sent by a second device, wherein a bandwidth of the PPDU comprises a plurality of 20 megahertz MHz subchannels; and the communication unit is further configured to perform overlapping basic service set packet detection OBSS PD-based spatial reuse, wherein a first signal strength level of the PPDU received by the first device is less than an OBSS PD level, and a unit of the first signal strength level is decibel-milliwatt dBm/20 MHz.

**9.** The first device according to claim 8, wherein the first signal strength level is obtained based on signal strength measurement results of a plurality of nonpunctured 20 MHz subchannels in the PPDU.

**10.** The first device according to claim 9, wherein the plurality of nonpunctured 20 MHz subchannels are located on a primary channel.

**11.** The first device according to claim 9 or 10, wherein the first signal strength level is obtained by normalizing the signal strength measurement results of the plurality of nonpunctured 20 MHz subchannels in the PPDU.

**12.** The first device according to claim 11, wherein

$$Rx\_PWR_{dBm/20MHz} = Rx\_PWR_{nonpunc-measured,total} - 10 \times log_{10} N_{nonpunc-measured} \quad,$$

wherein
$Rx\_PWR_{dBm/20MHz}$ is the first signal strength level, $Rx\_PWR_{nonpunc-measured,total}$ is a sum of the signal strength measurement results of the plurality of nonpunctured 20 MHz subchannels in the PPDU, and $N_{nonpunc-measured}$ is a number of the plurality of nonpunctured 20 MHz subchannels measured.

**13.** The first device according to claim 8, wherein the first signal strength level is obtained based on a signal strength measurement result of a nonpunctured 20 MHz subchannel in the PPDU, and the nonpunctured 20 MHz subchannel is a primary 20 MHz channel or a 20 MHz channel on which the first device operates.

**14.** The first device according to any one of claims 8 to 13, wherein

*OBSS_PD*$_{levle}$ ≤ max(*OBSS_PD*$_{min}$, min(*OBSS_PD*$_{max}$, *OBSS_PD*$_{min}$ + (TX_PWR$_{ref}$ - TX_PWR))),

wherein *OBSS_PD*$_{level}$ is the OBSS PD level, *OBSS_PD*$_{min}$ and *OBSS_PD*$_{max}$ are respectively a minimum value and a maximum value of *OBSS_PD*$_{level}$, *TX_PWR*$_{ref}$ is a reference power, and *TX_PWR* is a transmit power at which the second device sends the PPDU.

**15.** A first device, wherein the first device comprises a processor, a memory, and a transceiver, the memory is configured to store a computer program, the transceiver is configured to receive and send data, and the processor is configured to execute the computer program stored in the memory, to implement the method according to any one of claims 1 to 7.

**16.** A chip, wherein the chip comprises a processor and an interface, and the processor is coupled to the interface; and the interface is configured to receive or output a signal, and the processor is configured to execute code instructions, so that the method according to any one of claims 1 to 7 is performed.

**17.** A computer-readable storage medium, wherein the computer-readable storage medium stores computer-executable instructions, and when the computer-executable instructions are invoked by a computer, the computer is enabled to perform the method according to any one of claims 1 to 7.

**18.** A computer program product, wherein the computer program product comprises computer program code, and when the computer program code is run on a computer, the computer is enabled to perform the method according to any one of claims 1 to 7.

FIG. 1

Bandwidth range of a PPDU

Frequency band on which a first device operates

FIG. 2(a)

Bandwidth range of a PPDU

Frequency band on which a first device operates

FIG. 2(b)

Second device                    First device

301: Sends a PPDU to the first device

302: Perform OBSS PD-based spatial
reuse, where a first signal strength level
of the PPDU received by the first device
is less than an OBSS PD level, and a
unit of the first signal strength level is
decibel-milliwatt dBm/20 MHz

FIG. 3

AP 1 | PPDU 1 |                                              → Time

STA 1 | PPDU 2 |                                             → Time

AP 2 | Backoff process | PPDU 3 |                            → Time

STA 2                                                       → Time

FIG. 4

FIG. 5

Communication apparatus

Communication
unit                  / 601

Processing unit       / 602

FIG. 6

Communication apparatus 700

701

Processor    / 703
Instruction

702
Memory    / 704
Instruction

705
Transceiver

706
Antenna

FIG. 7

800

803

801

802

Chip

Memory

Processor

Interface

FIG. 8

## INTERNATIONAL SEARCH REPORT

| International application No. |
|---|
| **PCT/CN2022/136245** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; IEEE; 3GPP: 分贝毫瓦, 20MHz, 粒度, 归一化, 空间复用, 空分多址, 强度, 分贝, 物理层协议数据单元, 信道, 信号, 重叠基本服务集包, 识别, dBm, channel, decibel, OBSS, PPDU, RSI, RSSI, Spatial reuse, Overlapping Basic Service Set, Spatial multiplexing, OBSS PD, Physical Layer Protocol Data Unit, Received Signal Strength

**C. DOCUMENTS CONSIDERED TO BE RELEVANT**

| Category* | Citation of document, with indication, where appropriate, of the relevant passages | Relevant to claim No. |
|---|---|---|
| X | WO 2018084404 A1 (LG ELECTRONICS INC.) 11 May 2018 (2018-05-11) description, paragraphs [0098], [0130]-[0143], [0168]-[0207], and [0244]-[0253], and figures 12-13 | 1-18 |
| PX | WO 2022212468 A1 (INTERDIGITAL PATENT HOLDINGS INC.) 06 October 2022 (2022-10-06) description, paragraphs [0088], [0100]-[0101], [0163]-[0164], [0169]-[0170], and [0177] | 1-18 |
| A | CN 106941731 A (HUAWEI TECHNOLOGIES CO., LTD.) 11 July 2017 (2017-07-11) entire document | 1-18 |
| A | CN 106851848 A (HUAWEI TECHNOLOGIES CO., LTD.) 13 June 2017 (2017-06-13) entire document | 1-18 |
| A | US 2019141749 A1 (MEDIATEK SINGAPORE PTE LTD.) 09 May 2019 (2019-05-09) entire document | 1-18 |
| A | US 2021022156 A1 (CISCO TECHNOLOGY, INC.) 21 January 2021 (2021-01-21) entire document | 1-18 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 February 2023** | **01 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/136245** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106937403 A (HUAWEI TECHNOLOGIES CO., LTD.) 07 July 2017 (2017-07-07) entire document | 1-18 |
| A | CN 103916943 A (SOUTHEAST UNIVERSITY) 09 July 2014 (2014-07-09) entire document | 1-18 |
| A | US 2017071009 A1 (HUANG POKAI et al.) 09 March 2017 (2017-03-09) entire document | 1-18 |

Form PCT/ISA/210 (second sheet) (July 2022)

**INTERNATIONAL SEARCH REPORT**
Information on patent family members

| International application No. |
|---|
| **PCT/CN2022/136245** |

| Patent document cited in search report | | | Publication date (day/month/year) | Patent family member(s) | | | Publication date (day/month/year) |
|---|---|---|---|---|---|---|---|
| WO | 2018084404 | A1 | 11 May 2018 | None | | | |
| WO | 2022212468 | A1 | 06 October 2022 | None | | | |
| CN | 106941731 | A | 11 July 2017 | CN | 106941731 | B | 31 March 2020 |
| CN | 106851848 | A | 13 June 2017 | WO | 2017096918 | A1 | 15 June 2017 |
| | | | | EP | 3376813 | A1 | 19 September 2018 |
| | | | | EP | 3376813 | A4 | 14 November 2018 |
| | | | | EP | 3376813 | B1 | 23 September 2020 |
| | | | | US | 2018288800 | A1 | 04 October 2018 |
| | | | | US | 10645724 | B2 | 05 May 2020 |
| | | | | CN | 106851848 | B | 16 June 2020 |
| US | 2019141749 | A1 | 09 May 2019 | US | 10973052 | B2 | 06 April 2021 |
| | | | | EP | 3481129 | A1 | 08 May 2019 |
| | | | | EP | 3481129 | B1 | 17 August 2022 |
| | | | | TW | 201924375 | A | 16 June 2019 |
| | | | | TW | 690223 | B1 | 01 April 2020 |
| US | 2021022156 | A1 | 21 January 2021 | US | 11122594 | B2 | 14 September 2021 |
| CN | 106937403 | A | 07 July 2017 | WO | 2017114032 | A1 | 06 July 2017 |
| | | | | CN | 106937403 | B | 31 January 2020 |
| CN | 103916943 | A | 09 July 2014 | None | | | |
| US | 2017071009 | A1 | 09 March 2017 | US | 2018213565 | A1 | 26 July 2018 |
| | | | | US | 10244555 | B2 | 26 March 2019 |
| | | | | US | 9924540 | B2 | 20 March 2018 |

Form PCT/ISA/210 (patent family annex) (July 2022)

**REFERENCES CITED IN THE DESCRIPTION**

**Patent documents cited in the description**

- CN 202210164137